Europäisches Patentamt

European Patent Office

Office européen des brevets

(11) Veröffentlichungsnummer: **0 276 493**
**A2**

(12) **EUROPÄISCHE PATENTANMELDUNG**

(21) Anmeldenummer: **87119408.0**

(22) Anmeldetag: **31.12.87**

(51) Int. Cl.4: **H04M 3/60** , H04Q 3/62 , H04M 7/00

(30) Priorität: **29.01.87 DE 3702576**

(43) Veröffentlichungstag der Anmeldung:
**03.08.88 Patentblatt 88/31**

(84) Benannte Vertragsstaaten:
**AT BE CH GB IT LI NL**

(71) Anmelder: **TELENORMA Telefonbau und Normalzeit GmbH**
**Mainzer Landstrasse 128-146**
**D-6000 Frankfurt am Main(DE)**

(72) Erfinder: **Schmidt, Heinz**
**Egerstrasse 18**
**D-7120 Bietigheim-Bissingen(DE)**
Erfinder: **Bühler, Udo**
**Am Kugelrain 24**
**D-7336 Uhingen(DE)**
Erfinder: **Hutt, Hans-Ulrich**
**Adelberger Strasse 35**
**D-7336 Uhingen(DE)**
Erfinder: **Hutt, Hans**
**Poppstrasse 5**
**D-7336 Uhingen(DE)**

(54) Verfahren zum Erweitern der Anschlusskapazität und des Leitungszugriffs von Bedien- oder Abfrageplätzen bei Fernsprechvermittlungsanlagen, insbesondere Makler-Vielfachanlagen.

(57) Das erfindungsgemäße Verfahren besteht darin, daß mehrere selbstständig funktionsfähige Makler-Vielfachanlagen mit jeweils eigenen Externleitungsbündeln an eine übergeordnete Vermittlungsanlage angeschlossen sind, wobei jede Gruppe von Bedien-oder Abfrageplätzen, die jeweils an einem Makler-Vielfachanlage angeschlossen ist, nicht nur Zugang zu den Externleitungen der eigenen Makler-Vielfachanlage hat sondern auch über Anschlußorgane der übergeordneten Vermittlungsanlage verfügt. Darüber können gezielt die Externleitungen einer beliebigen anderen Makler-Vielfachanlage erreicht werden, so daß in diesem Fall ein Bedien-oder Abfrageplatz einer ersten Gruppe wie ein Bedien-oder Abfrageplatz einer anderen Gruppe wirkt, der an eine andere Makler-Vielfachanlage angeschlossen ist.

Fig. 1

## Verfahren zum Erweitern der Anschlußkapazität und des Leitungszugriffs von Bedien-oder Abfrageplätzen bei Fernsprechvermittlungsanlagen, inbesondere Makler-Vielfachanlagen

Die Erfindung betrifft ein Verfahren zum Erweitern der Anschlußkapazität und des Leitungszugriffs von Bedien-oder Abfrageplätzen für Fernsprechvermittlungsanlagen, insbesondere Makler-Vielfachanlagen nach dem Oberbegriff des Patentanspruches 1.

In den TN-Nachrichten 1972, Heft 73 von Seite 20 bis Seite 22 sind die Funktionsmerkmale einer Makler-Anlage beschrieben. Dort ist erwähnt, daß an jedem Abfrageplatz gleichzeitig mehrere ankommende und abgehende Verbindungen bestehen können, zwischen denen beliebig oft gewechselt, d.h. gemakelt werden kann. Solange auf einer Leitung gesprochen wird, sind alle anderen Verbindungen in Haltestellung geschaltet. Dabei können die wartenden Teilnehmer das Gespräch nicht mithören.

Bei derartigen Makler-Vielfachanlagen ist es wichtig, daß die Bedien-oder Abfrageplätze einen direkten Zugriff zu möglichst vielen Externleitungen haben. Die Anzahl der an eine Makler-Vielfachanlage anschließbaren Externleitungen und auch die Anzahl der anschließbaren Bedien-oder Abfrageplätze kann nicht beliebig groß sein, weil jede Fernsprechvermittlungsanlage eine obere Ausbaugrenze hat.

Wenn eine derartige Ausbaugrenze erreicht wird, so kann eine Fernsprechvermittlungsanlage und auch eine Makler-Vielfachanlage nicht mehr erweitert werden, so daß eine neue Vermittlungsanlage einer größeren Baustufe eingesetzt werden muß.

Aus der DE-OS 31 10 846 ist eine Schaltungsanordnung zur Erweiterung von Fernsprechnebenstellenanlagen bekannt, wobei Teilanlagen über eine übergeordnetes Koppelfeld zusammengeschaltet werden können. Diese Teilanlagen sind jedoch als Unteranlagen besonders ausgebildete Nebenstellenanlagen, and die ausschließlich Fernsprechteilnehmer-Apparate anschließbar sind. Wie aus der Zeichnung hervorgeht, sind Externleitungen, z.B. AUe, QUe, sowie Abfrageplätze ausschließlich an das übergeordnete Koppelfeld KFü angeschlossen. Um den Betrieb eines derartigen Anlagenverbundes zu ermöglichen, sind besondere Zwischenübertragungen, Zusatzeinrichtungen sowie besondere Steuereinrichtungen, z.B. SEÜ, erforderlich. Die für eine besondere Fernsprechvermittlungsanlage erforderlichen speziellen Merkmale, wie sie beispielsweise bei einer Makler-Vielfachanlage auftreten, müßten bei dieser Art einer Zusammenschaltung besonders berücksichtigt werden. Außerdem kann eine Schaltungsanordnung, wie sie in der DE-OS 31 10 846 dargestellt ist, für eine Makler-Vielfachanlage nicht optimal ausgelegt werden, weil die für einen erhöhten Externverkehr mit vielen Bedienungsplätzen erforderlichen Maßnahmen nicht berücksichtigt werden können.

Die Aufgabe der vorliegenden Erfindung besteht darin, ein Verfahren zum Erweitern der Anschlußkapazität und des Leitungszugriffes von Bedien-oder Abfrageplätzen bei Fernsprechvermittlungsanlagen, insbesondere Makler-Vielfachanlagen vorzuschlagen, wobei bereits vorhandene Makler-Vielfachanlagen kleinerer oder mittlerer Baustufe zur Anwendung kommen, die auch bei Erweiterungen ohne Änderungen beibehalten werden können, ohne daß spezielle Neuentwicklungen erforderlich sind.

Diese Aufgabe wird durch eine Merkmalskombination gelöst, wie sie im Patentanspruch 1 angegeben ist.

Damit wird in vorteilhafter Weise erreicht, daß bei Erweiterungen und auch bei der Neueinrichtung größerer Makler-Vielfachanlagen gleichermaßen selbstständig funktionsfähige Makler-Vielfachanlagen so zusammengeschaltet werden können, daß die gewünschte Ausbaugröße ohne zusätzliche Spezialentwicklungen erreicht werden kann. Dabei ist eine vollkommene Erreichbarkeit zwischen den einzelnen Bedien-oder Abfrageplätzen und allen zur Verfügung stehenden Externleitungsbündel gewährleistet. Die Aufgabe der übergeordneten Vermittlungsanlage besteht lediglich darin, Punkt - zu - Punkt - Verbindungen herzustellen, worüber der Austausch von Signalisierungs-und Nutzdaten möglich ist. Die Steuereinrichtungen der übergeordneten Vermittlungsanlage und der einzelnen Makler-Vielfachanlagen arbeiten dabei weitgehend unabhängig voneinander.

Mit den in den Unteransprüche angegebenen Weiterbildungen der Erfindung werden optimale Anpassungen an die vielfältigen Anwendungsfälle in der Praxis ermöglicht.

Ein Ausführungsbeispiel der Erfindung wird nachfolgend anhand von Zeichnungen näher erläutert.

Es zeigt:

Fig. 1 ein Prinzipschaltbild zur Durchführung des Verfahrens.

Fig. 2 ein Prinzipschaltbild, wobei die Bedien-oder Abfrageplätze ausschließlich an der übergeordneten Vermittlungsanlage angeschlossen sind.

Fig. 3 die direkte Zusammenschaltung zweier Makler-Vielfachanlagen ohne Verwendung einer übergeordneten Vermittlungsanlage.

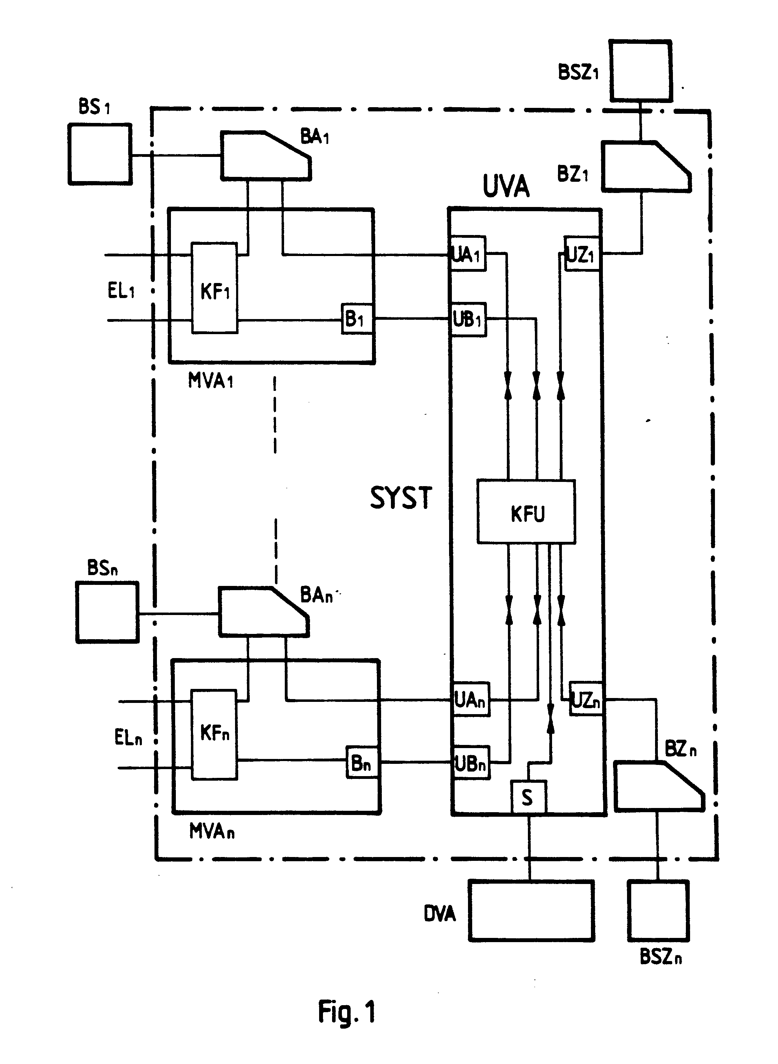

Das in Fig. 1 dargestellte Prinzipschaltbild zeigt das Gesamtsystem SYST einer großen Makler-Vielfachanlage, welches in der Hauptsache aus mehreren, jeweils eine einzelne selbstständig funktionfähige Makler-Vielfachanlage MVA1 bis MVAn enthaltenden Blöcken und einer übergeordneten Vermittlungsanlage UVA besteht. An die einzelnen Makler-Vielfachanlagen MVA1 bis MVAn sind jeweils eigene Externleitungsbündel EL1 bis ELn angeschlossen, welche über Koppelfelder KF1 bis KFn mit den Bedien-oder Abfrageplätzen BA1 bis BAn der jeweiligen Maker-Vielfachanlage MFA verbindbar sind.

Die Bedien-oder Abfrageplätze BA1 bis BAn sind zusätzlich mit Anschlußorganen UA1 bis UAn der übergeordneten Vermittlungsanlage UVA verbunden, worüber Verbindungen zu den jeweils anderen Makler-Vielfachanlagen möglich sind. Derartige Verbindungen werden im Koppelfeld KFU der übergeordneten Vermittlungsanlage UVA durchgeschaltet, wobei weitere Anschlußorgane UB1 bis UBn angesteuert werden. Diese Anschlußorgane sind mit entsprechenden Anschlüssen B1 bis Bn der einzelnen Makler-Vielfachanlagen MVA1 bis MVAn direkt verbunden, womit jeweils ein Zugang zu dem Koppelfeld KF1 bis KFn der einzelnen Makler-Vielfachanlage MVA1 bis MVAn gegeben ist. Wenn eine derartige Verbindung hergestellt wird, so läßt sich von einem Bedien-oder Abfrageplatz, beispielsweise BA1 aus eine beliebige Externleitung aus dem Externleitungsbündel, beispielsweise ELn der anderen Makler-Vielfachanlage, z.B. MVAn belegen. Die dazu notwendigen Prozeduren werden nachfolgend im einzelnen beschrieben.

Wenn die Gesamtzahl aller an die einzelnen Makler-Vielfachanlagen MVA1 bis MVAn anschließbaren Bedien-oder Abfrageplätzen BA1 bis BAn zur Betriebsabwicklung nicht ausreichend sein sollte, so können zusätzliche Bedien-oder Abfrageplätze BZ1 bis BZn über zugehörige Anschlußorgane UZ1 bis UZn unmittelbar an die übergeordnete Vermittlungsanlage UVA angeschlossen werden.

Alle Vermittlungsplätze haben über das Koppelfeld KFU der übergeordneten Vermittlungsanlage UVA die Möglichkeit, mit einer Datenverarbeitungsanlage DVA in Verbindung zu treten. Hierfür ist bei der übergeordneten Vermittlungsanlage UVA eine besondere Schnittstelle S vorgesehen.

Die Bedienungsprozeduren an den Bedien-oder Abfrageplätzen BA1 bis BAn sowie BZ1 bis BZn werden stark vereinfacht, wenn jeweils ein Bildschirm BS1 bis BSn bzw. BSZ1 bis BSZn zugeordnet ist. Auf einem solchen Bildschirm BS läßt sich beispielsweise der Belegtzustand aller zu einem vorher ausgewählten Externleitungsbündel EL anzeigen, so daß freie oder anrufende Leitungen sofort erkannt werden können. Durch eine über die Bildschirmoberfläche sich erstreckende Berührungstastatur kann dann durch Betasten einer Teilfläche die dort angezeigte Leitung belegt oder abgefragt werden.

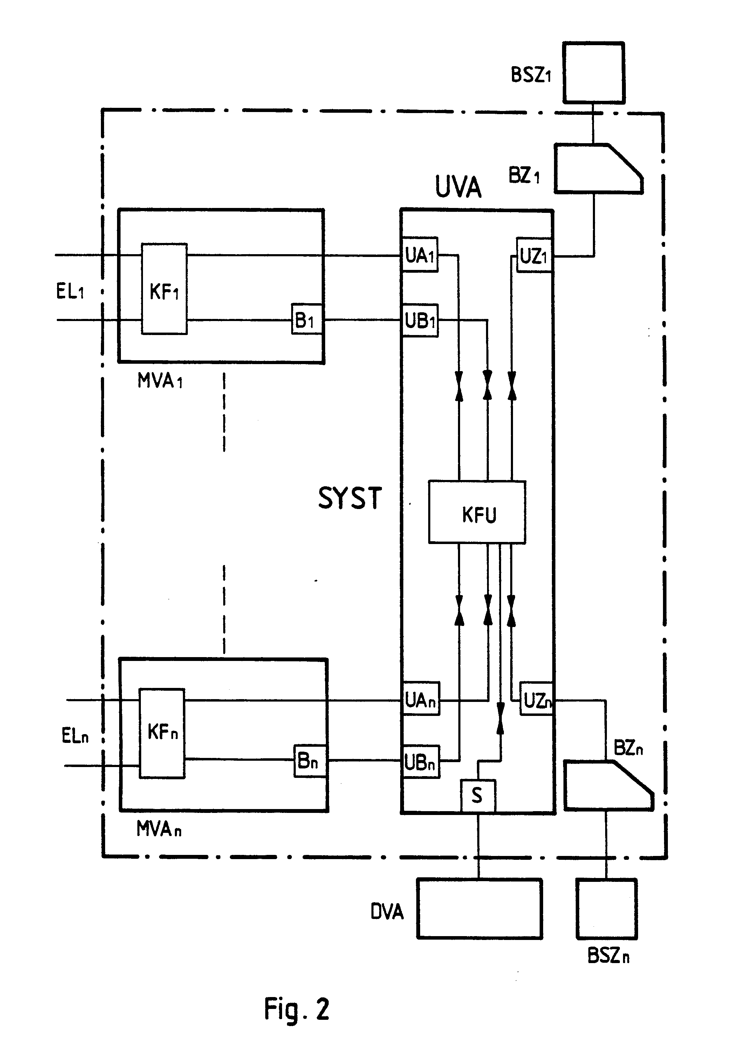

Das in der Fig. 2 dargestellte System SYST weist eine gegenüber der Fig. 1 vereinfachte Variante auf, wobei an den einzelnen Makler-Vielfachanlagen MFA1 bis MFAn keine Bedien-oder Abfrageplätze direkt angeschlossen sind. Dadurch werden zwar bei der übergeordneten Vermittlungsanlage UVA mehr Anschlußorgane UZ1 bis UZn erforderlich, jedoch wird dieser Mehraufwand durch die bei den einzelnen Makler-Vielfachanlagen MVA1 bis MVAn erzielbaren Einsparungen wieder aufgewogen. Eine Anordnung nach Fig. 2 kann sich als zweckmäßig erweisen, wenn bei relativ großen Makler-Vielfachsystemen eine flexible Anpassung an den jeweils zu erwartenden Fernsprechverkehr möglich sein soll.

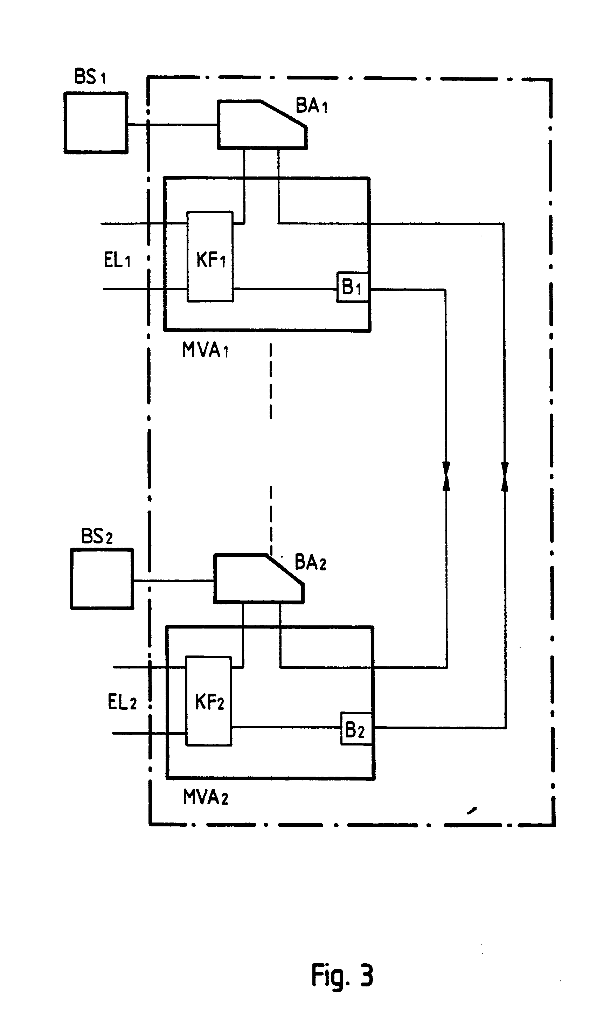

In der Fig. 3 ist eine noch weitergehende Vereinfachung dargestellt, die dann zur Anwendung kommen kann, wenn nur zwei Makler-Vielfachanlagen MVA1 und MVA2 zusammengeschaltet werden sollen. Es erübrigt sich dann, eine übergeordnete Vermittlungsanlage UVA einzusetzen. Die Bedien-oder Abfrageplätze BA1 und BA2 sind dabei jeweils an die Koppelfelder KF1 und KF2 der jeweils eigenen Makler-Vielfachanlage angeschlossen und haben außerdem direkten Zugang zu Anschlußorganen B2, bzw. B1 der jeweils anderen Makler-Vielfachanlage MVA2 bzw. MVA1.

Anhand der Fig. 1 wird nun beschrieben, auf welche Weise ein Bedien-oder Abfrageplatz einer ersten Gruppe, z.B. BA1, Zugang zu bestimmten Externleitungsbündeln EL1 bis ELn erhalten kann. Wenn von einem an eine erste Makler-Vielfachanlage MVA1 angeschlossenen Bedien-oder Abfrageplatz BA1 aus eine Externleitung aus dem an der eigenen Makler-Vielfachanlage MVA1 angeschlossenen Externleitungsbündel EL1 belegt werden soll, so wird zunächst ein diesem Bedien-oder Abfrageplatz BA1 zugeordnetes, nicht dargestelltes Anschlußorgan innerhalb der eigenen Makler-Vielfachanlage MVA1 belegt. Daraufhin wird an einer Anzeigeeinrichtung, beispielsweise einem Bildschirm BS1 der Belegtzustand bzw. der Verbindungszustand von Leitungen angezeigt. Mit Zieltasten oder auch durch Berührung von Bildschirm-Teilflächen kann dann gezielt eine Externleitung aus dem an die betreffende Makler-Vielfachanlage MVA1 angeschlossenen Externleitungsbündel EL1 angesteuert werden.

Soll jedoch eine Externleitung aus einem fremden Externleitungsbündel, z.B. ELn belegt werden, so wird durch Tastenbetätigung von einem Bedien-oder Abfrageplatz einer ersten Gruppe BA1 aus ein Anschlußorgan UA1 der übergeordneten Vermittlungsanlage UVA belegt. Durch eine zweckmäßigerweise mit Hilfe einer Zieltaste erfolgenden Eingabe von Wahlinformation wird über das Koppelfeld KFU der übergeordneten Vermittlungsanlage UVA eine Verbindung hergestellt zu derjenigen Makler-Vielfachanlage. MVAn, woran die gewünschte Externleitung angeschlossen ist. Dabei wird über ein Anschlußorgan UBn ein daran angeschlossenes Anschlußorgan Bn in der betreffenden Makler-Vielfachanlage MVAn belegt. Dabei wird zunächst ein Signalisierungskanal aufgebaut, worüber in Rückwärtsrichtung der Belegtzustand des ausgewählten Leitungsbündels ELn zu dem anfordernden Bedien-oder Abfrageplatz BA1 der Makler-Vielfachanlage MVA1 übertragen wird. Diese Information wird auf dem Bildschirm BS1 des Bedien-oder Abfrageplatz BA1 angezeigt, so daß der Verbindungszustand einer jeden einzelnen Leitung ersichtlich ist. Daraufhin kann die Auswahl der einzelnen Leitung durch Tastenbetätigung oder durch Berührung der betreffenden Bildschirmteilfläche gezielt erfolgen. Die dabei erzeugte Wahlinformation wird zu der betreffenden Makler-Vielfachanlage, z.B. MVAn über den Signalisierungskanal übertragen, um im Koppelfeld KFn den Verbindungsweg durchzuschalten. Dabei entsteht zusätzlich ein Nutzdatenkanal, worüber doppeltgerichtet Sprachinformationen austauschbar sind. Auf diese Weise kann ein beliebiger Bedien-oder Abfrageplatz mit jeder am Gesamtsystem SYST angeschlossenen Externleitung EL verbunden werden.

Wenn die Summe aller an die einzelnen Makler-Vielfachanlagen MVA1 bis MVAn anschließbaren Bedien-oder Abfrageplätze BA1 bis BAn für den zu bewältigenden Kommunikationsverkehr nicht ausreicht, oder auch aus organisatorischen Gründen, können zusätzliche Bedien-oder Abfrageplätze BZ1 bis BZn direkt an die übergeordnete Vermittlungsanlage UVA angeschlossen werden. Diese Bedien-oder Abfrageplätze BZ1 bis BZn haben dann in gleicher Weise Zugang zu allen Externleitungsbündeln EL1 bis ELn. Es kann sich auch als zweckmäßig erweisen, Bedien-oder Abfrageplätze BZ1 bis BZn nur an die übergeordnete Vermittlungsanlage UVA anzuschließen, womit der Vorteil verbunden ist, daß bei den einzelnen Makler-Vielfachanlagen MVA1 bis MVAn kein Steuerungsaufwand für Bedien-oder Abfrageplätze BA1 bis BAn erforderlich ist.

Alle Bedien-oder Abfrageplätze können außerdem über die übergeordnete Vermittlungsanlage UVA mit einer Datenverarbeitungsanlage DVA in Verbindung treten, um Informationsdaten zur Anzeige an den Bildschirmen abzurufen. Dadurch ist es möglich auch Informationen nicht vermittlungstechnischer Art, die für den Arbeitsablauf wichtig sind, ohne zusätzlichen Aufwand an den Bedien-oder Abfrageplätzen zur Verfügung zu haben.

Die Datenverarbeitungsanlage DVA ist über eine besondere Schnittstelle S an das Koppelfeld KFU der übergeordneten Vermittlungsanlage UVA angeschlossen, worüber ein Dialog zwischen dem betreffenden Bedien-oder Abfrageplatz und der Datenverarbeitungsanlage DVA stattfinden kann. Dies gilt sowohl für die über Anschlußorgane UA1 bis UAn angeschlossene Bedien-oder Abfrageplätze BA1 bis BAn der einzelnen Makler-Vielfachanlagen MVA1 bis MVAn als auch für direkt über Anschlußorgane UZ1 bis UZn der übergeordneten Vermittlungsanlage UVA angeschlossene Bedien-oder Abfrageplätze BZ1 bis BZn.

## Ansprüche

1. Verfahren zum Erweitern der Anschlußkapazität und des Leitungszugriffes von Bedien-oder Abfrageplätzen bei Fernsprechvermittlungsanlagen, insbesondere Makler-Vielfachanlagen, wobei die Bedien-oder Abfrageplätze einen unmittelbaren Zugriff zu einer Vielzahl von an die jeweilige Vermittlungsanlage angeschlossenen Externleitungen haben und mehrere Verbindungen gleichzeitig bestehen können, die durch Tastendruck wechselweise in den Gesprächszustand zu bringen sind,
dadurch gekennzeichnet,
daß mehrere selbstständig funktionsfähige Makler-Vielfachanlagen (MVA1 bis MVAn) mit jeweils eigenen Externleitungsbündeln (EL1 bis ELn) an einer übergeordnete Vermittlungsanlage (UVA) angeschlossen sind, wobei jede Gruppe von Bedien-oder Abfrageplätzen (z.B. BA1), die jeweils an eine Makler-Vielfachanlage (z.B. MVA1) angeschlossen ist, nicht nur Zugang zu den Externleitungen (z.B. EL1) der eigenen Makler-Vielfachanlage (z.B. MVA1) hat sondern auch über Anschlußorgane (z.B. UA1) der übergeordneten Vermittlungsanlage (UVA) verfügt, worüber gezielt die Externleitungen (z.B. ELn) einer beliebigen anderen Makler-Vielfachanlage (z.B. MVAn) erreichbar sind, so daß in diesem Fall ein Bedien-oder Abfrageplatz einer ersten Gruppe (z.B. BA1) wie ein Bedien-oder Abfrageplatz einer anderen Gruppe (z.B. BAn) wirkt, der an eine andere Makler-Vielfachanlage (z.B. MVAn) angeschlossen ist.

2. Verfahren nach Anspruch 1,
dadurch gekennzeichnet,
daß die übergeordnete Vermittlungsanlage (UVA) nur Verbindungen zwischen den einzelnen Makler-Vielfachanlagen (MVA1 bis MVAn) herstellt und keine direkt angeschlossenen Externleitungen (EL) hat.

3. Verfahren nach Anspruch 1,
dadurch gekennzeichnet,
daß die übergeordnete Vermittlungsanlage (UVA) digital durchschaltet, wobei zunächt ein Signalisierungskanal (z.B. Bn, UBn, UA1) besteht, worüber einem Bedien-oder Abfrageplatz einer Gruppe (z.B. BA1) die Daten über den Belegtzustand des fremden Externleitungsbündels (z.B. ELn) übertragen werden, die beispielsweise auf einem Bildschirm (BS1) angezeigt werden, woraufhin durch gezieltes Ansteuern einer bestimmten Leitung aus diesem Externleitungsbündel (ELn) ein Nutzdatenkanal zur Sprachübertragung zwischen jener Leitung und dem Bedien-oder Abfrageplatz dieser Gruppe (z.B. BA1) herstellbar ist.

4. Verfahren nach Anspruch 3,
dadurch gekennzeichnet,
daß bei den Anschlußorganen (UA, UB) der übergeordneten Vermittlungsanlage (UVA) Schnittstellen, z.B. Upo, angewendet werden, die für dienste-integrierende Netze, z.B. ISDN, genormt sind.

5. Verfahren nach Anspruch 3,
dadurch gekennzeichnet,
daß den Anschlußorganen (UA, UB) der übergeordneten Vermittlungsanlage (UVA) Umsetzeinrichtungen für Analog/Digital-und Digital/Analog-Wandlung zugeordnet sind, wenn eine Makler-Vielfachanlage (MVA) analog durchschaltet.

6. Verfahren nach Anspruch 3,
dadurch gekennzeichnet,
daß bei der übergeordneten Vermittlungsanlage (UVA) digitale Schnittstellen (z.B. S1) vorgesehen sind, worüber Daten zu Bildschirmen (BS1, BSn) übertragbar sind.

7. Verfahren nach Anspruch 1,
dadurch gekennzeichnet,
daß die Bedien-oder Abfrageplätze (BA1, Ban) über die übergeordnete Vermittlungsanlage (UVA) Zugang zu einer Datenverarbeitungsanlage (DVA) haben.

8. Verfahren nach Anspruch 1,
dadurch gekennzeichnet,
daß neben den zu den einzelnen Makler-Vielfachanlagen (MVA1 bis MVAn) gehörenden Bedien-oder Abfrageplätzen (BA1 bis BAn) zusätzliche Bedien-oder Abfrageplätze (BZ1 bis BZn) direkt an die übergeordnete Vermittlungsanlage (UVA) angeschlossen sind, die zu allen Makler-Vielfachanlagen (MV1 bis MVn) Zugang haben.

9. Verfahren nach Anspruch 1,
dadurch gekennzeichnet,
daß keine Bedien-oder Abfrageplätze (BA1 bis BAn) an die Makler-Vielfachanlagen (MVA1 bis MVAn) direkt sondern nur wie zusätzliche Bedien-oder Abfrageplätze (BZ) an die übergeordnete Vermittlungsanlage (UVA) angeschlossen sind.

10. Verfahren nach Anspruch 1,
dadurch gekennzeichnet,
daß beim Zusammenschalten von nur zwei Makler-Vielfachanlagen (MVA1, MVA2) die übergeordnete Vermittlungsanlage entfällt, und die Bedien-oder Abfrageplätze (BA1, BA2) zusätzlich gegenseitig direkten Zugang zur jeweils anderen Makler-Vielfachanlage (MVA2, MVA1) haben.

Fig. 1

Fig. 2

Fig. 3